# EUROPEAN PATENT SPECIFICATION

(11) **EP 1 899 586 B1**
(45) Date of publication and mention of the grant of the patent: **30.04.2014**
(21) Application number: 06733430.0
(22) Date of filing: 24.05.2006
(51) Int. Cl.: C22C 38/02, C22C 38/04, C22C 38/40, B01D 39/20, F01N 3/023

(54) **STAINLESS STEEL FOR FILTER APPLICATIONS.**
ROSTFREIER STAHL FÜR FILTERANWENDUNGEN
ACIER INOXYDABLE POUR FILTRES

(30) Priority: 01.07.2005 SE 0501543; 14.09.2005 US 716509 P
(43) Date of publication of application: 19.03.2008
(73) Proprietor: HÖGANÄS AB, 263 83 Höganäs (SE)
(72) Inventor: MÅRS, Owe, S-263 51 Höganäs (SE); HAUER, Ingrid, S-253 74 Helsingborg (SE)
(74) Representative: de Maré, Fredrick
(86) International application number: PCT/SE2006/000605
(87) International publication number: WO 2007/004941

(56) References cited:
- EP-A1- 0 665 300
- WO-A1-02/16662
- DE-A1- 10 321 524
- US-A- 3 993 445
- US-A- 4 014 680
- US-A- 4 535 034
- US-A- 5 009 857
- US-A- 5 123 243
- US-A- 5 266 279
- US-A1- 2004 099 354

## Description

### FIELD OF THE INVENTION

The invention relates to materials for filter. Specifically the invention concerns materials for filters for removing harmful constituents from combustion engines.

### BACKGROUND OF THE INVENTION

In the modern society the use of internal combustion engines is common in e.g. passenger cars and commercial vehicles. For environmental reasons it is of great interest to reduce harmful constituents from the combustion gases from the engines. Therefore much effort is put on the reduction of particles which are emitted from engines, especially from diesel engines as particles from diesel engines, e.g. carbon deposits, are considered to be a particular environmental problem.

Filters, which are available today for filtering particles from diesel engines are commonly made of ceramics, such as silicon carbide. The particles, which are captured in the filter, can be removed by combustion at high temperature. A problem encountered with ceramic filters is lack of thermal and mechanical shock resistance. The ceramic filters also have limitations in geometry, i.e. there are limitations as to the configuration of the filter.

Many different filters concerning the filter configuration are known, see e.g. the US patents 5 215 724, 5 405 423, 5 204 067, 5 240 485, 5 009 857. The material selection of the filters is however only superficially discussed and the chemical composition of the filter is not specifically discussed. Thus in e.g. the US patent 5 266 279 it is mentioned that steel consisting of 20% of nickel and 25% of chromium, the remainder being iron and traces of manganese and molybdenum, can be used as a material for the filter supporting wires, which are supporting a sintering material, which may be made of metals, ceramic materials, plastics or mixtures thereof.

US Patent 3 993 445 discloses a porous ferritic stainless steel having a density not greater than 80% of full density. The composition consists of 12-30% by weight of chromium, up to 1.5% manganese, up to 2% silicon, up to 8% molybdenum, up to 0.04% sulphur, up to 0.15% carbon, balance iron. Said composition has a corrosion resistance in chloride ion environments equivalent to the sintered austenitic stainless steels.

The lifetime of a filter is determined of the decrease of the permeability of gas through the filter. When exposed to oxidising gases at high temperature the oxides grow on the surface of the metal filling. This means that the porosity and thus the permeability of gas through the filter are decreased. Therefore, a less oxide formation will result in improved performance and increased lifetime of the filter.

### SUMMARY OF THE INVENTION

It has now surprisingly been found that a sintered filter material having improved lifetime may be obtained, if the material includes carefully controlled amounts of manganese. Specifically the manganese content should be between 1.0 and 3% by weight of the sintered steel. By adding manganese in this range the permeability will be maintained during a longer time of use due to less oxidation of the sintered steel. Other elements of the sintered steel are 10-30% by weight of chromium, 5-25% by weight of nickel, 1-4% by weight of silicon and 0-3% by weight of molybdenum. The amount of inevitable impurities are normally less than 2% by weight, preferably less than 0.5% by weight.

The filter may also have a density less than 70% of full density. Preferably the density is between 25 and 60% of full density. Higher density will not give enough permeability of gas and lower density gives too low filtering efficiency and low mechanical strength. Within this density range the permeability of the filter will be sufficient.

Furthermore the filter may include reinforcement which enhances the strength of the filter. The reinforcement may be in the form of fibres, wire or mesh.

### DETAILED DESCRIPTION OF THE INVENTION

The powders used for the preparation of the sintering material according to the invention are stainless steel powders having an elevated, controlled manganese content. Specifically these powders comprise 10-30% chromium, 5-25% nickel, 1.0-3% manganese, 1-4% silicon and 0-3% by weight of molybdenum.

Powders having a similar chemical composition are known from the US patents 3 980 444 and 4 964 909. These known powders are however used within the powder metallurgical field but, in contrast to the powders according to the present invention, the known powders are compacted and sintered to high densities.

As regards the silicon content this should be kept above 1% by weight to limit the oxygen content of the powder and below 4% by weight since higher silicon content does not lower the oxygen content further.

The powder according to the invention may be mixed with a binder and/or lubricant material to facilitate e.g. consolidation.

In one embodiment the powder may be spread onto a support to form a filter material. The filter material may be subsequently sintered. In another embodiment the powder is consolidated in a mould to form a filter element with or without reinforcement.

A reinforcement may be provided the powder metal during manufacturing of a filter material. The reinforcement may be fibres, wire or mesh e.g. expanded metal. The reinforcement may in one embodiment be manufactured of a stainless steel material.

Sintering may be performed in hydrogen or vacuum atmosphere at a temperature of 1120° to 1350°C. In this context sintering may also include vaporisation of binder. The sintering and vaporisation may also be performed as separate treatments

Without being bound to any specific theory it is believed that manganese in the amounts according to the invention will reduce the oxidation of the filter at elevated temperatures and therefore extend the life of the filter. Oxidation will result in less permeability of the filter and hence the performance of the filter is deteriorated in a shorter period of time.

The invention is illustrated by the following nonlimiting examples:

### Example 1

Filter specimens were produced from the iron-based powder according to the invention and from an iron-based reference powder. The filter specimens were circular specimens having a diameter of 10 mm and a thickness of 0.5 mm. The filter specimens where manufactured to have a density of 40% of full density. The sintering was performed at 1250°C for 30 minutes. In table 1 the chemical analysis in weight percent of various powders are presented. The reference powder is 310B, which is available from Höganäs AB, Sweden.

**Table 1**

| Material | %Cr% | %Ni | %Mn | %Si |
|---|---|---|---|---|
| REF | 24.9 | 20.8 | 0.0 | 2.67 |
| A | 22.4 | 20.4 | 1.03 | 2.44 |
| B | 24.4 | 19.7 | 2.03 | 2.01 |
| C | 24.6 | 20.2 | 3.03 | 2.45 |
| D | 24.8 | 20.0 | 4.02 | 2.86 |

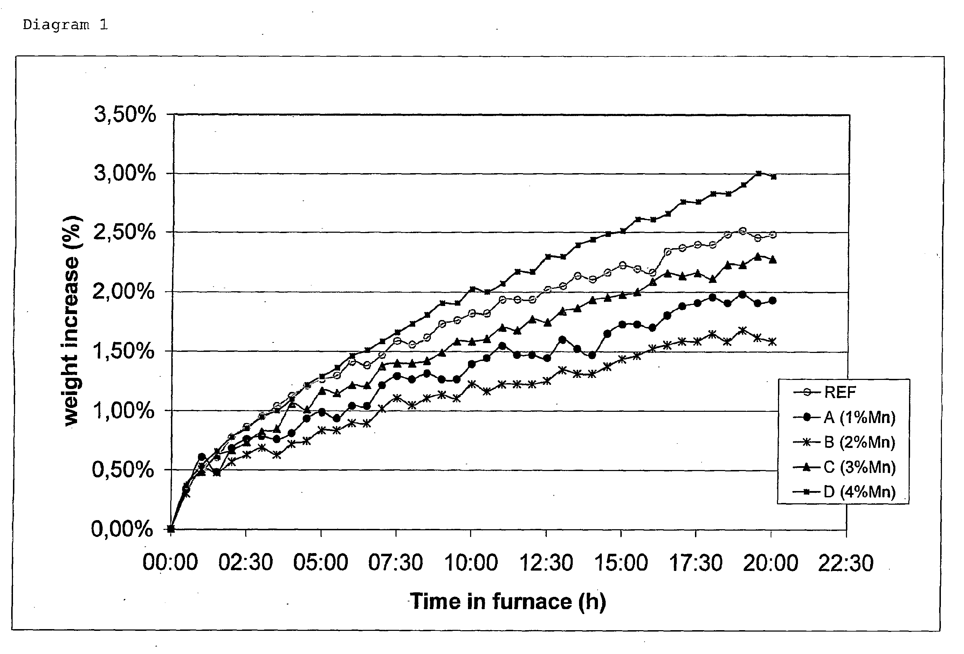

The filter samples where then heated to a predetermined temperature of 800° C for 2 minutes in air and then cooled to room temperature for 30 seconds. This cycle was then repeated for a period of 20 hours. Every 15th cycle the weight of the samples was recorded to measure the oxide build-up. The purpose of this test is to provoke and measure oxidation of the samples. In diagram 1 the dependency of time and weight increase is presented for each material tested. The effect of certain contents of manganese is clear. From diagram 1 it can be seen that a remarkable decrease in weight increase is achieved by adding manganese in a content of about 2% by weight. A preferred range for the manganese content is between 1% and 3%.

### Example 2

Pressure drop measurements were performed to evaluate the performance of the filter after certain time of use. The measurements were performed by applying 0.5 bar compressed air on the inlet in a filter holding device. The pressure loss caused by the filter was then measured. All filters were tested before and after oxidisation. The pressure drop was then calculated as the difference between the oxidised and non-oxidised filter. In table 2 the results from the pressure drop measurements are presented. The weight increase in example 1 corresponds to the pressure drop which is presented in example 2. Therefore the weight increase illustrates the pressure drop.

**Table 2**

| Material | REF | | | B | | |
|---|---|---|---|---|---|---|
| Specimen | 1 | 2 | 3 | 4 | 5 | 6 |
| Pressure drop (%) | 11 | 11 | 17 | 3 | 3 | 5 |

## Claims

1. Filter comprising a porous sintered stainless steel, including 10-30% by weight of chromium, 5-25% by weight of nickel, 1-3% by weight of manganese, 1-4% by weight of silicon, 0-3% by weight of molybdenum, the remainder being iron and inevitable impurities, said sintered steel having a density less than 80% of full density.

2. Filter according to claim 1 having a density less than 70% of full density.

3. Filter according to any one of claims 1 or 2 having a density between 25% and 60% of full density.

4. Filter according to any one of claims 1 to 3 further comprising a reinforcement.

5. Filter according to claim 4, wherein the reinforcement is in the form of fibres, wire or mesh.

## Patentansprüche

1. Filter, umfassend einen porösen gesinterten rostfreien Stahl, der 10 bis 30 Gewichts-% Chrom, 5 bis 25 Gewichts-% Nickel, 1 bis 3 Gewichts-% Mangan, 1 bis 4 Gewichts-% Silizium, 0 bis 3 Gewichts-% Molybdän enthält, wobei es sich bei dem Rest um Eisen und unvermeidbare Verunreinigungen handelt, wobei der gesinterte Stahl eine Dichte von weniger als 80 % der vollen Dichte aufweist.

2. Filter nach Anspruch 1 mit einer Dichte von weniger als 70 % der vollen Dichte.

3. Filter nach Anspruch 1 oder 2 mit einer Dichte von zwischen 25 % und 60 % der vollen Dichte.

4. Filter nach einem der Ansprüche 1 bis 3, der ferner eine Verstärkung umfasst.

5. Filter nach Anspruch 4, wobei die Verstärkung in Form von Fasern, Draht oder Maschen vorliegt.

## Revendications

1. Filtre comprenant un acier inoxydable fritté poreux, comportant 10 à 30 % en poids de chrome, 5 à 25 % en poids de nickel, 1 à 3 % en poids de manganèse, 1 à 4 % en poids de silicium, 0 à 3 % en poids de molybdène, le reste étant du fer et d'inévitables impuretés, ledit acier fritté présentant une masse volumique inférieure à 80 % de la masse volumique maximale.

2. Filtre selon la revendication 1, présentant une masse volumique inférieure à 70 % de la masse volumique maximale.

3. Filtre selon l'une quelconque des revendications 1 ou 2, présentant une masse volumique entre 25 % et 60 % de la masse volumique maximale.

4. Filtre selon l'une quelconque des revendications 1 à 3, comprenant en outre un renforcement.

5. Filtre selon la revendication 4, dans lequel le renforcement est sous forme de fibres, de fil métallique ou de grillage.
